# EUROPEAN PATENT APPLICATION

(11) **EP 4 759 789 A1**
(43) Date of publication of application: **17.06.2026**
(21) Application number: 24220318.0
(22) Date of filing: 16.12.2024
(51) Int. Cl.: C05F 3/00, C05F 17/10, C05F 17/40

(54) **DIGESTATE COMPOSITION**

(71) Applicant: Duynie Holding B.V., 2407 AJ Alphen aan den Rijn (NL)
(72) Inventor: BARKER, Martin James, 2407 AJ ALPHEN AAN DEN RIJN (NL)
(74) Representative: Arnold & Siedsma

(57) **Abstract**

The invention pertains to a digestate composition comprising phosphorus, nitrogen and potassium, wherein the weight ratio of ammonia and phosphorous pentoxide is at most 0.3.

## Description

Digestate compositions remain after anaerobic digestion or fermentation of organic feedstock, e.g. animal manure. Such anaerobic fermentation is a good way to produce biomethane. Moreover, it is a way to consume excess animal manure. In many countries there is great pressure to reduce the use of animal manure as fertilizer across arable land due to the deposition of nitrogen (or ammonia) in neighbouring forests and flora. There is quite some activity to process animal manure. One such process is mechanical separation of a liquid and a solid fraction which is subsequently purified e.g. by nanofiltration. Alternatively, anaerobic fermentation is used to obtain a digestate which is subsequently separated in a liquid and a solid fraction. Despite all these efforts, there is still a need for improved manure processing.

The objective of the present invention is to provide novel digestate compositions.

The invention pertains to a digestate composition comprising phosphorus, nitrogen and potassium, wherein the weight ratio of ammonia and phosphorous pentoxide is at most 0.3. The digestate composition of the invention is low in nitrogen content compared to conventional digestate compositions from animal manure. Such a low nitrogen content is advantageous for use on arable land, especially in countries with restrictions on nitrogen levels in fertilizers. A further advantage is that with the inventive digestate composition allows for better management of the N level and the P level in soil separately. Moreover, the inventive digestate compositions generally allow for a quick release of phosphorus. It is believed that this is due to the digestate being a result of a fermentation process, which enables the phosphorous pentoxide source to be free and not enclosed in cell wall or fiber material. The low nitrogen level in the digestate composition is reached by separating a nitrogen-rich liquid fraction from the animal manure before fermentation of the remaining thick fraction.

The term "digestate composition" or "digestate refers to the material remaining after the anaerobic digestion or fermentation of a biodegradable feedstock. In one embodiment, the digestate composition is a digestate composition originating from animal manure. Preferably, the animal manure is selected from cow manure, swine manure and poultry manure.

The inventive digestate composition comprises phosphorus, nitrogen and potassium. The wording "phosphorus" refers to the phosphorus-containing compounds remaining in the digestate. These phosphorus-containing compounds are generally expressed as phosphorous pentoxide (P₂O₅), in particular in fertilizers. With the term "nitrogen" is meant the nitrogen-containing compounds remaining in the digestate. The wording "potassium" refers to the potassium-containing compounds remaining in the digestate. Generally, the amount of soluble phosphorus-containing, nitrogen-containing and potassium-containing compounds is significantly reduced in the inventive digestate composition. In particular, the amount of volatile compounds, such as ammonia or ammonium, is considerably diminished.

In the digestate composition of the invention the weight ratio of ammonia and phosphorous pentoxide is at most 0.3. Preferably, the weight ratio of ammonia and phosphorous pentoxide is at most 0.25, more preferably at most 0.2 and most preferably at most 0.15, and preferably the weight ratio of ammonia and phosphorous pentoxide is at least 0.01, more preferably at least 0.02 and most preferably at least 0.05.

The phosphorus-containing compounds, also referred to as P compounds and expressed in P₂O₅, can be any P compound known in the art and present in animal manure and/or digestate thereof. Examples of such P compounds include soluble P compounds such as (inorganic) phosphates; labile P compounds such as struvite (MgNH₄PO₄.6H₂O) and dicalcium phosphate anhydrous (DCPA or CaHPO₄); less soluble P compound such as tricalcium phosphate (TCP) and hydroxylapatite (HAp or Ca₅(PO₄)₃OH); and phytic acid or phytates. The term "labile P compounds" refers to P compounds that can be extracted with water and sodium bicarbonate as is indicated in Komiyama et al (https://doi.org/10.1080/00380768.2019.1615384)

In one embodiment, the digestate composition comprises at least 0.01 kg/m³ P₂O₅. Preferably, the inventive digestate composition comprises at least 0.1 kg/m³ P₂O₅, more preferably at least 0.2 kg/m³ P₂O₅, more preferably at least 0.5 kg/m³ P₂O₅, even more preferably at least 0.8 kg/m³ P₂O₅ and most preferably at least 1 kg/m³ P₂O₅, and preferably at most 10 kg/m³ P₂O₅, more preferably at most 5 kg/m³ P₂O₅ and most preferably at most 3 kg/m³ P₂O₅, based on the total dry weight of the digestate composition. The amount of P₂O₅ can be determined using any method known in the art. An example of such a method is atomic absorption spectroscopy (AAS) or induced coupled plasma spectroscopy (ICP).

In one embodiment, the digestate composition comprises struvite. Preferably, the inventive digestate composition comprises at least 5 wt% struvite, more preferably at least 10 wt% struvite, more preferably at least 15 wt% struvite, even more preferably at least 20 wt% struvite and most preferably at least 25 wt% struvite, and preferably at most 60 wt% struvite, more preferably at most 55 wt% struvite and most preferably at most 50 wt% struvite, based on the total dry weight of the P compounds. The advantage of the presence of struvite in the inventive digestate composition is that struvite is capable of slowly releasing the phosphate. This allows for a lower number of fertilizing steps.

In one embodiment, the digestate composition comprises struvite and DCPA. Preferably, the inventive digestate composition comprises at least 5 wt% struvite and DCPA, more preferably at least 10 wt% struvite and DCPA, more preferably at least 15 wt% struvite and DCPA, even more preferably at least 20 wt% struvite and DCPA and most preferably at least 25 wt% struvite and DCPA, and preferably at most 60 wt% struvite and DCPA, more preferably at most 55 wt% struvite and DCPA and most preferably at most 50 wt% struvite and DCPA, based on the total dry weight of the P compounds.

In one embodiment, the digestate composition comprises water soluble phosphates. Preferably, the inventive digestate composition comprises at most 15 wt% water soluble phosphates, more preferably at most 10 wt% water soluble phosphates, more preferably at most 5 wt% water soluble phosphates, even more preferably at most 2 wt% water soluble phosphates and most preferably at most 1 wt% water soluble phosphates, and preferably at least 0.01 wt% water soluble phosphates, more preferably at least 0.02 wt% water soluble phosphates and most preferably at least 0.05 wt% water soluble phosphates, based on the total dry weight of the P compounds.

The nitrogen-containing compounds, also referred to as N compounds, can be any N compound known in the art and present in animal manure and/or digestate thereof. Examples of such N compounds include soluble N compounds such as ammonia (or ammonium) and nitrates; and organic nitrogen compounds such as proteins and urea. The N compounds can be expressed in total nitrogen, nitrate nitrogen and ammonium nitrogen. The wording "total nitrogen" refers to sum of soluble nitrogen compounds like ammonium/ammonia and nitrates and organic nitrogen compounds. The term "nitrate nitrogen" refers to the nitrates (NO3) present; such nitrates are generally metal salts of nitrates. With the term "ammonium nitrogen" is meant the ammonium (NH₄⁺) and/or ammonia (NH₃) present.

In one embodiment, the digestate composition comprises at least 0.01 kg/m³ total nitrogen. Preferably, the inventive digestate composition comprises at least 0.05 kg/m³ total nitrogen, more preferably at least 0.1 kg/m³ total nitrogen, more preferably at least 0.2 kg/m³ total nitrogen, even more preferably at least 0.3 kg/m³ total nitrogen and most preferably at least 0.4 kg/m³ total nitrogen, and preferably at most 2 kg/m³ total nitrogen, more preferably at most 1.5 kg/m³ total nitrogen and most preferably at most 1 kg/m³ total nitrogen, based on the total dry weight of the digestate composition. The total nitrogen content can be determined using any method known in the art. An example of such a method is the Kjeldahl method, e.g. in AOAC 955.04.

In one embodiment, the digestate composition comprises at least 0.01 kg/m³ ammonium nitrogen. Preferably, the inventive digestate composition comprises at least 0.02 kg/m³ ammonium nitrogen, more preferably at least 0.03 kg/m³ ammonium nitrogen, more preferably at least 0.04 kg/m³ ammonium nitrogen, even more preferably at least 0.05 kg/m³ ammonium nitrogen and most preferably at least 0.06 kg/m³ ammonium nitrogen, and preferably at most 1 kg/m³ ammonium nitrogen, more preferably at most 0.5 kg/m³ ammonium nitrogen and most preferably at most 0.2 kg/m³ ammonium nitrogen, based on the total dry weight of the digestate composition. The ammonium nitrogen content can be determined using any method known in the art. An example of such a method is AOAC 920.03.

In one embodiment, the digestate composition comprises at least 0.001 kg/m³ nitrate nitrogen. Preferably, the inventive digestate composition comprises at least 0.002 kg/m³ nitrate nitrogen, more preferably at least 0.003 kg/m³ nitrate nitrogen, more preferably at least 0.004 kg/m³ nitrate nitrogen, even more preferably at least 0.005 kg/m³ nitrate nitrogen and most preferably at least 0.006 kg/m³ nitrate nitrogen, and preferably at most 0.5 kg/m³ nitrate nitrogen, more preferably at most 0.2 kg/m³ nitrate nitrogen and most preferably at most 0.1 kg/m³ nitrate nitrogen, based on the total dry weight of the digestate composition. The nitrate nitrogen content can be determined using any method known in the art. An example of such a method is AOAC 892.01.

In one embodiment, the digestate composition comprises at least 0.1 kg/m³ organic nitrogen. Preferably, the inventive digestate composition comprises at least 0.2 kg/m³ organic nitrogen, more preferably at least 0.25 kg/m³ organic nitrogen, more preferably at least 0.3 kg/m³ organic nitrogen, even more preferably at least 0.35 kg/m³ organic nitrogen and most preferably at least 0.4 kg/m³ organic nitrogen, and preferably at most 2 kg/m³ organic nitrogen, more preferably at most 1.5 kg/m³ organic nitrogen and most preferably at most 1 kg/m³ organic nitrogen, based on the total dry weight of the digestate composition.

In the digestate composition of the invention the weight ratio of ammonia and organic nitrogen is at most 4. Preferably, the weight ratio of ammonia and organic nitrogen is at most 3, more preferably at most 2 and most preferably at most 1, and preferably the weight ratio of ammonia and organic nitrogen is at least 0.01, more preferably at least 0.02 and most preferably at least 0.05.

The potassium-containing compounds, also referred to as K compounds and expressed in K₂O, can be any K compound known in the art and present in animal manure and/or digestate thereof. Examples of such K compounds include soluble K compounds such as KCl and K₂SO₄.

In one embodiment, the digestate composition comprises at least 0.01 kg/m³ K₂O. Preferably, the inventive digestate composition comprises at least 0.1 kg/m³ K₂O, more preferably at least 0.2 kg/m³ K₂O, more preferably at least 0.5 kg/m³ K₂O, even more preferably at least 0.8 kg/m³ K₂O and most preferably at least 1 kg/m³ K₂O, and preferably at most 10 kg/m³ K₂O, more preferably at most 5 kg/m³ K₂O and most preferably at most 3 kg/m³ K₂O, based on the total dry weight of the digestate composition. The amount of K₂O can be determined using any method known in the art. An example of such a method is atomic absorption spectroscopy (AAS) or induced coupled plasma spectroscopy (ICP).

In the digestate composition of the invention the weight ratio of ammonia and potassium oxide is at most 3. Preferably, the weight ratio of ammonia and potassium oxide is at most 2.5, more preferably at most 2 and most preferably at most 1.5, and preferably the weight ratio of ammonia and potassium oxide is at least 0.01, more preferably at least 0.1 and most preferably at least 0.5.

In one embodiment, the digestate composition comprises organic matter. Such organic matter, also referred to as volatile solids, can be any organic matter known in the art and present in animal manure and/or digestate thereof. During anaerobic fermentation of the animal manure a large part of the organic matter is consumed. The remaining organic matter or volatile solids generally remains in the digestate.

In one embodiment, the digestate composition comprises at least 10 wt% organic matter, based on the total dry weight of the digestate composition. Preferably, the inventive digestate composition comprises at least 20 wt% organic matter, preferably at least 30 wt% organic matter, more preferably at least 40 wt% organic matter and most preferably at least 50 wt% organic matter, and preferably at most 99 wt% organic matter, more preferably at least 95 wt% organic matter and most preferably at most 90 wt% organic matter, based on the total dry weight of the digestate composition.

In a further embodiment, the digestate composition comprises at most 10 wt% water. Preferably, the digestate composition comprises at most 9 wt% of water, more preferably at most 8 wt%, even more preferably at most 7 wt% and most preferably at most 5 wt%, and preferably at least 0.001 wt%, more preferably at least 0.01 wt% and most preferably at least 0.1 wt%, based on the total weight of the digestate composition. It is also envisaged to use the digestate which is directly obtained from the fermentation reactor, which comprises much more water, even water levels exceeding 90 wt%.

The amounts of P compounds, N compounds, K compounds, organic matter, water and any other components add up to 100% by weight of the digestate composition.

The invention further pertains to a fertilizer composition comprising the digestate composition of the invention. In particular, the invention pertains to a fertilizer composition comprising the digestate composition comprising phosphorus, nitrogen and potassium, wherein the weight ratio of ammonia and phosphorous pentoxide is at most 0.3.

The invention further pertains to a process for preparing a digestate composition comprising phosphorus, nitrogen and potassium, wherein the weight ratio of ammonia and phosphorous pentoxide is at most 0.3 comprising the steps of:
(a) separating a nitrogen-containing liquid from manure to obtain a thick fraction;
(b) fermenting the thick fraction to produce methane and a digestate composition; and
(c) removing water from the digestate composition.

The inventive process has the advantage that the soluble nitrogen compounds, especially ammonia, is removed in step (a), which results in an improved yield in fermentation step (b). Furthermore, the removal of nitrogen compounds in step (a) results in a digestate composition with a relatively low ammonia content. Particularly, the amount of P compounds is considerably higher than the amount of N compounds ending up in the digestate composition. A further advantage is that the methane produced during the fermentation step can be used as energy source in the inventive process, e.g. during the water removal step of step (c), or for electricity production or other energy-requiring processes. This process further allows for a lowering of the carbon footprint for animal keeping as well as enables a lower dependency on fossil fuels.

In step (a) of the inventive process, a nitrogen-containing liquid is separated from manure to obtain a thick fraction. The separation can be performed using any known method known in the art which is suitable for separating the liquid and the solid fraction of manure. Examples of such methods include methods using filtration, sedimentation and decantation, vibrating screen separation, rotational screen separation, static screen separation, a screw press, a belt press, a roller press and centrifugation. Generally, about 90 wt% of the animal manure can be separated as liquid fraction or nitrogen-containing liquid and the remaining part is the solid fraction or thick fraction. The nitrogen-containing liquid typically contain soluble N compounds such as nitrates and ammonia (or ammonium) as well as water soluble phosphates and potassium compounds. The thick fraction typically contains less soluble or insoluble N and P compounds, such as proteins, urea, struvite, DCPA, TPA and phytic acid and/or phytates.

In one embodiment, the temperature of the mixture in step (a) is at most 50 °C, preferably the temperature is at most 40°C, more preferably at most 30°C and most preferably at most 25°C, and preferably at least 0°C, more preferably at least 5°C and most preferably at least 10°C.

In step (b) of the inventive process the thick fraction is fermented to produce methane and a digestate composition. The fermentation step (b) can be performed using any anaerobic fermentation process known in the art. An overview of manure fermentation, suitable bacteria and fermentation conditions can be found in Song et al (https://doi.org/10.3390/ fermentation9050436). An advantage of the current process is that a separation of the liquid and solid phase of the digestate is not necessary as this separation is performed prior to the fermentation step (b). In one embodiment, the fermentation is performed using fresh animal manure, e.g. cow manure, which is diluted. The manure contains bacteria that can ferment the thick fraction. It is noted that the fermentation step (b) may lead to an increase of up to 30% of methane which is due to the removal of nitrogen compounds such as urea and ammonia from the original manure.

In one embodiment, the temperature in step (b) is at least 20°C. Preferably, the temperature is at least 25 °C, preferably the temperature is at least 30°C, more preferably at least 35°C and most preferably at least 40°C, and preferably at most 70°C, more preferably at most 60°C and most preferably at most 55°C. The temperature will depend on the bacterial species used; mesophiles generally require a moderate temperature from 20°C to 40°C, and thermophiles generally have an optimum temperature between 50°C and 70°C. As the ammonia content is relatively low in the thick fraction a higher temperature may be chosen.

In one embodiment, the fresh animal manure is processed within 48 hours after excretion by the animal in order to avoid further formation of ammonia in the manure prior to processing.

In step (c) of the inventive process, water is removed from the digestate composition of step(b). Water is removed when the digestate composition comprises in excess of 10 wt% water, based on the total weight of the digestate composition. The water removal step of step (c) generally leads to a digestate composition comprising at most 10 wt% water, based on the total weight of the digestate composition. The removal of water can be performed using any known method for water removal. Examples of such methods include liquid/solid separation as indicated above, drying in an oven, drying in a fluidized bed, a spinning flash dryer, a belt dryer, multi-stage evaporator and a drum dryer. It is also envisaged to use a multitude of water removal methods, e.g. excess water can be mechanically removed, which step is followed by a drying step.

In one embodiment, the temperature in step (c) is maintained at a temperature below 100°C. Preferably, the temperature is at most 95 °C, preferably the temperature is at most 90°C, more preferably at most 85°C and most preferably at most 80°C, and preferably at least 50°C, more preferably at least 55°C and most preferably at least 60°C.

In optional step (d) of the inventive process, ammonia is removed from the nitrogen-containing liquid. Ammonia removal can be performed using any method known in the art. Examples of such methods include gas-liquid stripping using a packed column, using bubble aeration, using a water-sparged cyclone, using thermal stripping and spraying. More details can be gleaned from Palakodeti et al. (DOI:10.1016/j.rser.2021.110903). An advantage of the inventive process is that the nitrogen-containing liquid has a low amount of solids, rendering a higher ammonia recovery.

In one embodiment, the gaseous ammonia can subsequently be captured using an ammonia absorber, e.g. in an ion exchange column. Subsequently, the captured ammonia can be converted to ammonium sulfate using sulfuric acid.

In another embodiment, the ammonia can be converted to nitrogen and hydrogen using electrolysis.

In one embodiment, the temperature in step (d) is maintained at a temperature below 100°C. Preferably, the temperature is at most 95 °C, preferably the temperature is at most 90°C, more preferably at most 85°C and most preferably at most 80°C, and preferably at least 50°C, more preferably at least 55°C and most preferably at least 60°C.

In one embodiment of the inventive process, the pH in step (d) is maintained at a pH value of at least 8, preferably at least 8.5, more preferably at least 9 and most preferably at least 9.5,and preferably at most 13, more preferably at most 12.5 and most preferably at most 12. A higher pH generally leads to a higher concentration of free ammonia, which can consequently more effectively be transferred to the gas phase.

In one embodiment, the nitrogen-containing liquid from which ammonia is extracted can be dried to form a fertilizer composition comprising potassium, nitrogen and potassium.

In optional step (e) of the inventive process, methane from step (b) is used to produce energy for removing water in step (c). The energy produced from methane can be in any form, e.g. electrical energy and/or heat. With the produced energy, the energy required for drying of the digestate composition, for example using a multi-stage evaporator, can be completely or partially provided.

The invention is exemplified in the following Examples.

### Examples

### Example 1: digestate from swine manure

3 tons of fresh swine manure was fed to a liquid/solid separator to obtain 2.7 tons of a liquid fraction and 0.3 tons of a solid fraction.

A solution of cow slurry (or fresh cow manure) was diluted with water (1:1) and heated to 37°C in a fermenter under anaerobic conditions. The pH was maintained between 6.8 and 7.8. 0.3 tons of the solid fraction is metered to the suspension. About 90% of the solid fraction is converted to methane. About 54 m³ of methane is produced. A digestate was collected and dried. The dried digestate of the invention comprises about 5 wt% moist and about 95 wt% of organic matter. The digestate has the following composition:

**Table 1: digestate composition and the swine manure composition**

| Ingredient | Swine manure | Digestate |
|---|---|---|
| Total nitrogen (kg/m³) | 1.67 | 0.56 |
| Ammonium nitrogen (kg/m³) | 1.60 | 0.09 |
| Nitrate nitrogen (kg/m³) | 0.01 | 0.01 |
| Phosphorus as P₂O₅ (kg/m³) | 1.49 | 1.53 |
| Potassium as K₂O (kg/m³) | 1.56 | 2.02 |
| Ammonia/P₂O₅ | 1.07 | 0.06 |
| Ammonia/K₂O | 1.03 | 0.04 |

The digestate of the invention has an ammonia of P₂O₅ weight ratio of 0.06 which is significantly lower than the ammonia/P₂O₅ ratio in the original swine manure. Also the ammonia over K₂O weight ratio is significantly lower in the digestate compared to the swine manure. These results show an effective removal of ammonia and a digestate rich in phosphorus compounds.

2.7 tons of the liquid fraction was circulated for 8 hours over an ammonia scrubber (absorption column ex Membracon) at a pH of 7 to 12 (using sodium bicarbonate to adjust the pH) and at 65°C, while air is blown into the absorption column. The ammonia-containing gas is captured in cold water at a pH below 7 to obtain an ammonium-containing aqueous solution.

The ammonia-containing gas can be used in an electrolysis process to produce hydrogen. Alternatively, sulphuric acid can be introduced in the scrubber to convert ammonia to ammonium sulfate.

## Claims

1. Digestate composition comprising phosphorus, nitrogen and potassium, wherein the weight ratio of ammonia and phosphorous pentoxide is at most 0.3.

2. Digestate composition according to claim 1 wherein the weight ratio of ammonia and potassium oxide is at most 0.3.

3. Digestate composition according to any one of the preceding claims wherein the composition comprises at most 2 wt% ammonia, based on the total dry weight of the digestate composition.

4. Digestate composition according to any one of the preceding claims wherein the composition comprises at least 10 wt% organic matter, based on the total dry weight of the digestate composition.

5. A process for preparing a digestate composition comprising phosphorus, nitrogen and potassium, wherein the weight ratio of ammonia and phosphorous pentoxide is at most 0.3 comprising the steps of:
(a) separating a nitrogen-containing liquid from manure to obtain a thick fraction;
(b) fermenting the thick fraction to produce methane and a digestate composition; and
(c) removing water from the digestate composition.

6. Process according to claim 5 further comprising:
(d) removing ammonia from the nitrogen-containing liquid.

7. Process according to any one of claims 5 and 6 further comprising:
(e) using methane from step (b) to produce the energy for removing water of step (c).
